# EUROPÄISCHE PATENTSCHRIFT

(11) **EP 2 524 584 B1**
(45) Veröffentlichungstag und Bekanntmachung des Hinweises auf die Patenterteilung: **10.12.2014**
(21) Anmeldenummer: 12401080.2
(22) Anmeldetag: 08.05.2012
(51) Int. Cl.: A01B 79/00, A01C 17/00, G01G 23/00, G01G 19/08, A01B 59/06

(54) **Landwirtschaftliches Gerät**
Agricultural device
Appareil agricole

(30) Priorität: 17.05.2011 DE 102011050411
(43) Veröffentlichungstag der Anmeldung: 21.11.2012
(73) Patentinhaber: Amazonen-Werke H. Dreyer GmbH & Co. KG, 49205 Hasbergen (DE)
(72) Erfinder: Wernsmann, Daniel, 49074 Osnabrück (DE)

(56) Entgegenhaltungen:
- EP-A1- 2 028 461
- EP-A1- 2 415 338
- WO-A1-2007/112718
- DE-A1- 19 901 563
- GB-A- 2 324 377

## Beschreibung

Die Erfindung betrifft ein landwirtschaftliches Gerät mit Wiegevorrichtung gemäß des Oberbegriffes des Patentanspruches 1.

Durch die GB 2 324 377 A ist ein landwirtschaftliches Gerät gemäß des Oberbegriffes des Anspruches 1 bekannt. Bei diesem Gerät ist eine Vorrichtung zur Ermittlung des Gewichts vom Material, welches sich in einem Behälter befindet, bekannt. Hierbei wird über Neigungssensoren ein Korrekturfaktor ermittelt, welcher in die Berechnung des Gewichts von sich im Behälter befindlichen Materials einfließt.

In der EP 0 537 857 B1 wird eine Vorrichtung zum Streuen von Gut vorgestellt, bei der nicht nur Neigungssensoren verwendet werden, sondern darüber hinaus werden drei Beschleunigungsmesser verwendet, mit welchen die Beschleunigungskomponenten des Gewichtsmessers in alle drei Raumrichtungen ermittelt werden. Dadurch kann eine Korrektur am vom Gewichtsmesser gemessenen Wert erfolgen, welche nicht nur Einflüsse von Neigungen der Vorrichtung, sondern auch von Beschleunigungen der Vorrichtung in alle drei Raumrichtungen auf das letztendlich ausgegebene Signal vermindert. Bei dieser Vorrichtung zum Streuen von Gut wird demnach eine Vielzahl von Sensoren und dementsprechend eine Vielzahl von einzelnen Schritten zur Bestimmung eines Korrekturfaktors verwendet.

Ein weiteres landwirtschaftliches Gerät, das an eine landwirtschaftliche Maschine anbaubar ist und dessen Gewicht ermittelbar ist, wobei das ermittelte Gewicht mittels Messungen der Neigung des landwirtschaftlichen Geräts korrigiert wird, ist aus der EP 0 407 705 A1 bekannt. Das landwirtschaftliche Gerät ist insbesondere dadurch gekennzeichnet, dass der Korrekturfaktor zur Korrektur des bei Neigung gemessenen Gewichts davon bestimmt wird, welche Neigung die Vorrichtung momentan aufweist, wobei die Neigung von einer Neigungsmessvorrichtung gemessen wird. Messfehler der Neigungsmessvorrichtung durch die Beschleunigung des landwirtschaftlichen Geräts in eine der drei Raumrichtungen werden dabei nicht berücksichtigt.

Der Erfindung liegt die Aufgabe zugrunde, eine vorteilhafte Verwendung bzw. Anordnung von Sensoren zur Bestimmung eines Korrekturfaktors vorzuschlagen, bei der die Anzahl von Sensoren und/oder Schritten zur Bestimmung des Korrekturfaktors zumindest erheblich verringert wird.

Diese Aufgabe wird erfindungsgemäß durch das Kennzeichen des Patentanspruches 1 gelöst. Dabei werden nur Neigungssensoren verwendet, um mittels eines in einem Bordcomputer hinterlegten Rechenprogramms Korrekturen an den mit den Neigungssensoren aufgenommenen und in einem Speicherelement des Bordcomputers gespeicherten Messdaten vorzunehmen. Dies ist insbesondere aufgrund der Verringerung von Herstellungskosten vorteilhaft. Weiterhin ist die Verwendung von weniger Sensoren mit einer Vereinfachung der verwendeten elektronischen Schaltungen verbunden und geht mit der Vereinfachung von Rechenarbeiten einher.

Weiterhin werden die Neigungssensoren gleichzeitig als Beschleunigungssensoren verwendet. Bei der Beschleunigung eines landwirtschaftlichen Gerätes liefern Neigungssensoren aufgrund ihrer gewöhnlichen Funktionsweise Messkurven, die sich bei gewöhnlichen Beschleunigungen, zu denen auch das Bremsen, Kurvenfahrten und Auf- und Abbewegungen aufgrund von beispielsweise Bodenunebenheiten gehören, von den im landwirtschaftlichen Betrieb von den zu erwartenden Neigungsverläufen hervorgerufenen Messwerten unterscheiden. Insbesondere erfolgt eine Auswertung der aufgenommenen Messkurven über ein in dem Bordcomputer hinterlegtes Rechenprogramm. Maximal zu erwartende Neigungen, die ein landwirtschaftliches Gerät auf einer landwirtschaftlichen Fläche erfährt, bewegen sich üblicher Weise im Bereich von 15°-30°. Über eine geeignete Auswahl von Grenzkriterien können Intervalle von ausgewerten Messwerten festgelegt werden, in welchen zu erwartende ausgewertete Werte liegen. Dabei ist wichtig, in welcher Zeit bestimmte Neigungswerte erreicht werden. Liegen die ausgewerteten Werte in diesen Intervallen, so werden sie zur Bestimmung des tatsächlichen Gewichtes zumindest des im Vorratsbehälter befindlichen Guts des landwirtschaftlichen Geräts herangezogen. Die zur erfindungsmäßen Nutzung der Messdaten festzulegenden Intervalle können stark von der jeweiligen Situation abhängen. Beispielsweise kann es erforderlich sein, für unterschiedliche Anbaugeräte und/oder veränderte Rechenparameter unterschiedliche Intervalle zu wählen. Die Intervalle werden jeweils so gewählt, dass die in diesen Intervallen liegenden Messkurvenabschnitte nicht allein aus den zu erwartenden Neigungen erzeugbar sind.

Bei der Auswertung der Messwerte ist es nötig, die Messwerte zu filtern. Dies erfolgt bevorzugt mittels Bessel-Tiefpassfilter. Nach der Filterung der aufgenommenen Messwerte werden einfache Rechenoperationen aufgrund eines im Speicher des Bordcomputers hinterlegten Rechenprogramms durchgeführt und/oder mathematische Funktionen angewandt, um die Korrektur des gemessenen Gewichts mit Korrekturfaktoren der Neigung und mit einer Korrektur aufgrund der Beschleunigung vorzunehmen.

Nach der Auswertung der Messwerte durch das im Speicher des Bordcomputers hinterlegten Programms wird ein Signal übertragen, das das korrigierte Gewicht beinhaltet, wobei das Signal beispielsweise über CAN-Bus übertragen werden kann. Treten ausgewertete Messwerte auf, die außerhalb der festgelegten Intervalle liegen, so wird ein dementsprechendes Signal, z.B. über CAN-Bus, übertragen.

Die Verwendung von beispielsweise CAN-Bus bietet den Vorteil, dass die übermittelten Signale und Nachrichten frei wählbar sind.

Basierend auf dem übermittelten Signal, können mit Hilfe eines Bordcomputers Betriebsparameter des landwirtschaftlichen Gerätes angepasst werden. Beispielsweise kann die Dosieröffnung eines Schleuderdüngerstreuers weiter geöffnet oder weiter geschlossen zu werden, um die gewünschte Ausbringmenge pro Flächeneinheit und/oder pro Zeiteinheit zu erreichen, wenn die ausgebrachte Düngermenge zu gering oder zu groß ist. Beispielsweise kann auch die Fahrgeschwindigkeit der landwirtschaftlichen Maschine, die das landwirtschaftliche Gerät zum Sammeln und/oder Ausbringen von Gut verwendet, angepasst werden.

Enthält das übermittelte Signal die Information, dass die ausgewerteten Messwerte außerhalb der festgelegten Intervalle liegen, so werden die gegenwärtigen Parameter beibehalten und nicht angepasst. Erst wenn ausgewertete Messwerte vorliegen, die in den festgelegten Intervallen liegen, werden wieder entsprechende Anpassungen der Betriebsparameter vorgenommen, wenn die ausgewerteten Messwerte darauf hindeuten, dass dies erforderlich ist.

Durch die Speicherung der Messwerte und/oder ausgewerteten Messwerte in einem Speicherelement des Bordcomputers, kann der Arbeitsverlauf später anhand eines im Speicher des Bordcomputers hinterlegten Auswerteprogramms ausgewertet und beispielsweise mit vorangegangenen Bearbeitungen derselben landwirtschaftlichen Fläche verglichen werden.

Weitere Einzelheiten der Erfindung sind der Beispielsbeschreibung und der Zeichnungen zu entnehmen. Hierbei zeigen
- Fig. 1: eine Verteilmaschine mit Vorsatzrahmen und Wiegezellenelement in Seitenansicht und in Prinzipdarstellung und
- Fig. 2: Flussdiagramm zur Darstellung der Auswertevorgänge im Bordcomputer.

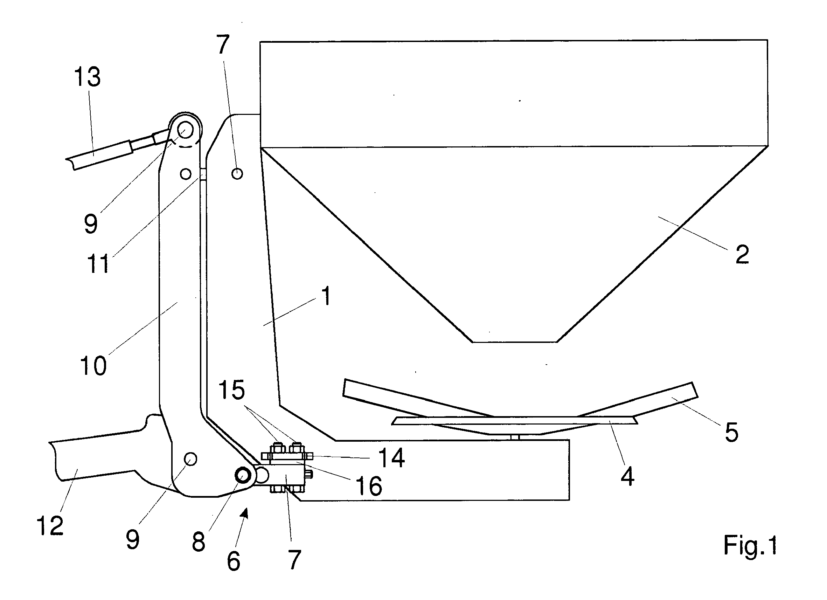

Die als Schleuderdüngerstreuer ausgebildete Verteilmaschine in Fig. 1 weist einen Rahmen 1 und einen Vorratsbehälter 2 auf. Das untertrichterförmige Ende des Vorratsbehälters 2 ist mit einer nicht dargestellten Dosiereinrichtung ausgestattet, die das sich im Vorratsbehälter 2 befindliche Material in einstellbarer Weise der unterhalb der Dosiereinrichtung und des Vorratsbehälters angeordneten Verteileinrichtung 3 zuführt. Die Verteileinrichtung 3 ist als rotierend angetriebene Schleuderscheibe 4, die Wurfschaufeln 5 aufweist, ausgebildet. Die Dosiereinrichtung besitzt eine Stelleinrichtung, die in bevorzugter Weise als elektrischer Stellmotor ausgebildet ist und von dem Bordcomputer 14 angesteuert wird.

Der Rahmen 1 weist auf seiner Vorderseite zwei untere Kupplungspunkte 6 und einen oberen Kupplungspunkt auf. An den unteren Kupplungspunkten 6, die beabstandet zueinander angeordnet sind, der zumindest in etwa den Abstand der unteren Dreipunktkupplungselemente 9 entspricht, sind Wiegezellenelemente 7 angeordnet. An den vorderen unteren Enden der beiden Wiegezellenelemente 7 ist über Kupplungsbolzen 8 ein Dreipunktkupplungselemente 9 aufweisender Vorsatzrahmen 10 angeordnet. Im oberen Bereich ist der Vorsatzrahmen 10 über eine zumindest annähernd parallel zu den Wiegezellenelementen 7 verlaufenden Zwischenlenker 11 mit den Rahmen 1 der Verteilmaschine verbunden. Über die Dreipunktkupplungselemente 9 des Vorsatzrahmens 10 wird die Verteilmaschine an die Unterlenker 12 und Oberlenker 13 der Dreipunktkupplung eines Ackerschleppers angekuppelt.

Aufgrund der Anordnung des Vorsatzrahmens 10 über die beiden Wiegezellen 7 und den oberen Zwischenlenker 11 ist eine Relativbewegung zwischen dem Rahmen 1 der Maschine und dem Vorsatzrahmen 10 möglich. Hierdurch können die Wiegezellen 7 Messwerte aufnehmen und diese über nicht dargestellte Leitungen an den Bordcomputer 14 übermitteln.

Die am Rahmen 1 angeordneten Neigungssensoren 15 messen die Neigung der Verteilmaschine um beide horizontalen Raumachsen, wobei auch beliebige Beschleunigungen der Verteilmaschine zu der gemessenen Neigung und dem Verlauf der Neigungsmesskurven, die als Daten in geeigneter Weise an den Bordcomputer 14 übermittelt werden, beitragen. Im Bordcomputer 14 erfolgt die Auswertung der Messwerte und/oder Messkurven von Wiegezelle 7 und Neigungssensoren 15.

Bei unbeschleunigter Bewegung der Verteilmaschine lässt sich über einfache Winkelfunktionen, die in einem Programm des Bordcomputers 14 hinterlegt sind, berechnen, welcher Korrekturfaktor bei einer Neigung der Verteilmaschine auf das von der Wiegezelle 7 gemessene Gewicht angewandt werden muss, um das tatsächliche Gewicht zu bestimmen.

Bei beschleunigter Bewegung der Verteilmaschine werden von den Neigungssensoren Messkurven erzeugt und als Daten an den Bordcomputer 14 übermittelt, die nicht dem tatsächlichen Neigungsverlauf der landwirtschaftlichen Fläche entsprechen, sondern deutlich davon abweichen können. Die festlegbaren Intervalle werden festgelegt, indem die gewöhnlich zu erwartenden Neigungen der landwirtschaftlichen Fläche betrachtet werden. Außerdem wird betrachtet, welche Messkurven sich ergeben, wenn Beschleunigungen beliebiger Art auftreten. Mit Hilfe des Bordcomputers 14 kann dann festgestellt werden, ob die von den Neigungssensoren 15 ermittelten Messkurven derart verlaufen, dass sie zumindest erheblich von Beschleunigungen beeinflusst worden sein müssen. Dabei ist wichtig, in welcher Zeit bestimmte Neigungswerte erreicht wurden. Die genauen Kriterien für die Festlegung der Intervalle und damit die Entscheidung darüber, ab wann Messkurven als erheblich von Beschleunigungen beeinflusst eingestuft werden, erfolgt jeweils auf den speziellen Messaufbau angepasst. Beispielsweise kann es erforderlich sein, für unterschiedliche Anbaugeräte und/oder veränderte Rechenparameter unterschiedliche Intervalle zu wählen.

Während der Auswertung der Messkurven wird das Ergebnis jedes Schrittes über einen CAN-Bus von dem Auswerteprogramm an den Bordcomputer 14 ausgegeben. Im Anschluss an die Auswertung werden über CAN-Bus Signale vom Bordcomputer ausgegeben, welche zur Überwachung und ggf. Regulierung der Betriebsparameter, welche weiter unten näher erläutert werden, verwendet werden können. Dabei werden von Beschleunigungen nicht erheblich beeinflusste Messkurvenabschnitte zur Überwachung und ggf. Regulierung der Betriebsparameter herangezogen. Hingegen werden erheblich von Beschleunigungen beeinflusste Messkurvenabschnitte nicht zur Überwachung und ggf. Regulierung der Betriebsparameter herangezogen. Stattdessen wird ein Signal über CAN-Bus ausgegeben, das die Information enthält, dass der Messkurvenabschnitt erheblich von Beschleunigungen beeinflusst wurde. Somit wird keine Nachstellung der Dosierung vorgenommen.

Verlaufen die von den Neigungssensoren 15 ermittelten Messkurven innerhalb der festgelegten Intervalle, so wird ein dementsprechendes Signal ausgegeben, wodurch, falls nötig, eine Regulierung der Betriebsparameter der Verteileinrichtung, beispielsweise Rotationsgeschwindigkeit der Schleuderscheibe 4 und/oder Durchflussmenge von Gut durch die Dosiereinrichtung und/oder Einstellung der Wurfschaufeln 5, erfolgt. Liegen die Ergebnisse außerhalb der festgelegten Intervalle, so wird ein dementsprechendes Signal ausgegeben und keine Regulierung der Betriebsparameter wird vorgenommen.

Die CAN-Nachrichten können frei gewählt werden. So kann beispielsweise eine Warnung über den Bordcomputer 14 ausgegeben werden, wenn die Verteilmaschine zu stark beschleunigt wird, um zu ermöglichen, dass eine Betriebsweise gewählt wird, die ermöglicht, zuverlässige Gewichtsmessungen durchzuführen.

In einem nicht dargestellten Speicherelement des Bordcomputers 14 können alle Messdaten gespeichert werden. Später können sie dann zum Zweck der Auswertung der Bearbeitung der landwirtschaftlichen Fläche, beispielsweise auch zum Vergleich mit der früheren Bearbeitung, herangezogen werden.

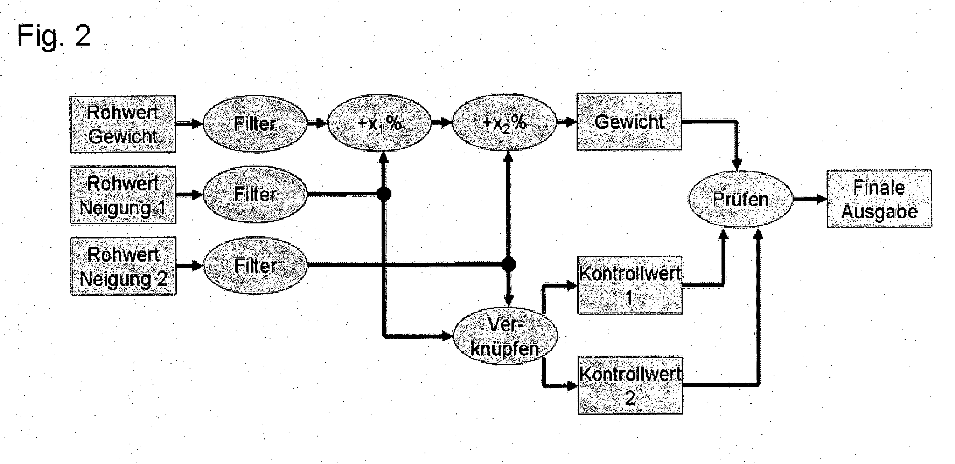

Fig. 2 zeigt schematisch die vorbeschriebenen Vorgänge, die nachfolgend näher erläutert werden, mit denen die Messdaten im Bordcomputer 14 ausgewertet werden. Dabei erfolgt nach jedem Bearbeitungschritt die Ausgabe des Ergebnisses über CAN-Bus, wobei jede Ausgabe manuell und/oder automatisch speicherbar ist. Zunächst werden die gemessenen Rohwerte der Wiegezelle 7 (Rohwert Gewicht) und der Neigungssensoren 15 (Rohwert Neigung 1 und Rohwert Neigung 2) mittels ihnen zugeordneter, gleichartiger Filter gefiltert. Mit Rohwert Gewicht werden dabei die von der Wiegezelle 7 gemessenen Gewichtsdaten ohne Korrektur bezeichnet. Rohwert Neigung 1 und Rohwert Neigung 2 bezeichnen die gemessenen Werte der Neigungssensoren 15. Nach der Filterung aller drei Rohwerte werden die gefilterten Rohwerte der Neigungssensoren 15 verwendet, um den gefilterten Rohwert des Gewichtes rechnerisch durch die im Speicher des Bordcomputers 14 hinterlegten Rechenoperationen zu korrigieren. Dabei werden einfache Winkelfunktionen verwendet, um die Korrekturwerte x₁ und x₂ zu erhalten. Es ergibt sich damit das zu messende Gewicht.

Die gefilterten Messwerte von den Neigungssensoren 15 werden zudem geschickt miteinander verknüpft, so dass sich zwei Kontrollwerte (Kontrollwert 1 und Kontrollwert 2) ergeben. Dabei wird auf die in einem Speicherelement des Bordcomputers 14 hinterlegten mathematischen Funktionen und/oder Operationen zurück gegriffen.

Schließlich werden diese Kontrollwerte in einer Prüfung auf das gemessene und berechnete Gewicht angewandt. Dabei werden die aus den Messdaten errechneten Kurven durch das im Speicher des Bordcomputers 14 hinterlegte Programm auf die festgelegten Intervalle hin untersucht, wodurch festgestellt wird, ob das ermittelte Gewicht durch Einflüsse von Beschleunigungen verfälscht wurde.

Eine dem Prüfergebnis entsprechende finale Datenausgabe erfolgt über den Bordcomputer 14. Liegen die ermittelten Daten innerhalb der festgelegten Intervalle, so erfolgt die Ausgabe eines Signals, anhand dessen, falls nötig, eine Regulierung der Betriebsparameter der Verteileinrichtung erfolgt. Liegen die ermittelten Daten außerhalb der festgelegten Intervalle, so wird ein dementsprechendes Signal ausgegeben und keine Regulierung der Betriebsparameter wird vorgenommen.

## Patentansprüche

1. Landwirtschaftliches Gerät zum Ausbringen von Gut aus einem Vorratsbehälter (2), beispielsweise zum Ausbringen von körnigem und/oder pulverförmigem und/oder flüssigem Pflanzenschutz- und/oder Düngemittel und/oder Saatgut, und/oder zum Sammeln von Gut in einen Vorratsbehälter (2), beispielsweise eine Erntemaschine, mit einer Vorrichtung zur Ermittelung des Gewichts, insbesondere einer Wiegezelle (7), zumindest des momentan eingefüllten Guts, wobei Korrekturfaktoren des Gewichts mittels Neigungssensoren (15) in Verbindung mit einem Bordcomputer (14) bestimmt werden, um fehlerhafte Ausgaben der Vorrichtung zur Ermittelung des Gewichts durch Neigung des landwirtschaftlichen Gerätes zu minimieren, wobei zusätzlich weitere äußere Einflüsse, wie Beschleunigungen durch Sensormesswerte minimierbar sind, wobei nur aus den von den Neigungssensoren (15) ermittelten Messwerten die Korrekturfaktoren für die Neigung und Korrekturen für die Beschleunigung ableitbar sind, **dadurch gekennzeichnet, dass** Grenzen für die aus den Neigungswerten ableitbaren Messkurven so gewählt werden, dass sich Intervalle ergeben, welche bei landwirtschaftlicher Arbeit auftretende, aus den Neigungswerten ableitbare Messkurven umfassen, dass die gewählten Intervalle diejenigen abgeleiteten Messkurvenbereiche nicht beinhalten, die durch die Beschleunigung des landwirtschaftlichen Gerätes in eine oder mehrere Raumrichtung/en bei der landwirtschaftlichen Arbeit auftreten, wobei im Bordcomputer ein Programm hinterlegt ist, das ein Modell beinhaltet, welches Beschreibt für welche Messkurvenverläufe die Messkurvenverläufe durch Neigungen und für welche Messkurvenverläufe die Messkurvenverläufe durch Beschleunigungen entstehen.

2. Landwirtschaftliches Gerät nach Anspruch 1, **dadurch gekennzeichnet, dass** das ermittelte Gewicht für die Regelung von Betriebsparametern des landwirtschaftlichen Gerätes mittels eines Bordcomputers (14) verwendbar ist.

3. Landwirtschaftliches Gerät nach zumindest einem der vorangehenden Ansprüche, **dadurch gekennzeichnet, dass** ein Signal ausgegeben wird, z.B. über CAN-Bus, welches das korrigierte Gewicht beinhaltet, wenn die ausgewerteten Neigungswerte in den festgelegten Intervallen liegen.

4. Landwirtschaftliches Gerät nach zumindest einem der vorangehenden Ansprüche, **dadurch gekennzeichnet, dass** ein Signal ausgegeben wird, z.B. über CAN-Bus, welches die Information enthält, dass die ausgewerteten Neigungswerte nicht in den festgelegten Intervallen liegen, wenn die ausgewerteten Neigungswerte nicht in den festgelegten Intervallen liegen.

5. Landwirtschaftliches Gerät nach zumindest einem der vorangehenden Ansprüche, **dadurch gekennzeichnet, dass** CAN Nachrichten frei wählbar sind.

6. Landwirtschaftliches Gerät nach zumindest einem der vorangehenden Ansprüche, **dadurch gekennzeichnet, dass** die während des Betriebes ermittelten Daten abrufbar in einem Speicherelement, vorzugsweise des Bordcomputers (14), speicherbar sind.

## Claims

1. Agricultural device for discharging material from a storage container (2), for example for discharging granulated and/or powderous and/or liquid crop protection agent and/or fertilizer and/or seed, and/or for collecting material into a storage container (2), for example a harvesting machine, having an apparatus for determining the weight, in particular a weighing cell (7), at least of the instantaneously filled-in material, wherein correction factors of the weight are determined by means of inclination sensors (15) in conjunction with an on-board computer (14), in order to minimize incorrect outputs of the apparatus for determining the weight as a result of inclination of the agricultural device, wherein in addition further external influences, such as accelerations owing to sensor measured values, can be minimized, wherein the correction factors for the inclination and corrections for the acceleration can be derived only from the measured values determined by the inclination sensors (15), **characterized in that** limits for the measurement curves which can be derived from the inclination values are selected in such a way that intervals are obtained which comprise measurement curves which occur during agricultural work and can be derived from the inclination values, **in that** the selected intervals do not contain those derived measurement curve regions which occur owing to the acceleration of the agricultural device in one or more spatial directions during the agricultural work, wherein a programme is stored in the on-board computer which contains a model which describes for which measurement curve profiles the measurement curve profiles owing to inclinations are produced and for which measurement curve profiles the measurement curve profiles owing to accelerations are produced.

2. Agricultural device according to Claim 1, **characterized in that** the determined weight can be used to perform closed-loop control of operating parameters of the agricultural device by means of an on-board computer (14).

3. Agricultural device according to at least one of the preceding claims, **characterized in that** a signal which contains the corrected weight when the evaluated inclination values are in the defined intervals is output, for example via CAN bus.

4. Agricultural device according to at least one of the preceding claims, **characterized in that** a signal which contains the information that the evaluated inclination values are not in the defined intervals when the evaluated inclination values are not in the defined intervals is output, for example via CAN bus.

5. Agricultural device according to at least one of the preceding claims, **characterized in that** CAN messages can be freely selected.

6. Agricultural device according to at least one of the preceding claims, **characterized in that** the data determined during operation can be stored in a memory element, preferably of the on-board computer (14), in such a way that it can be retrieved.

## Revendications

1. Engin agricole destiné à l'épandage de produit depuis un réservoir (2), par exemple l'épandage de produits phytosanitaires et/ou de fertilisants et/ou de semences sous forme de grains et/ou de poudre et/ou liquide, et/ou destiné à collecter un produit dans un réservoir (2), par exemple une moissonneuse, comprenant un dispositif de détermination du poids, notamment une cellule de pesage (7), au moins du produit momentanément chargé, des facteurs de correction du poids étant déterminés à l'aide de capteurs d'inclinaison (15) en association avec un ordinateur de bord (14) afin de réduire les résultats erronés du dispositif de détermination du poids en raison de l'inclinaison de l'engin agricole, d'autres influences externes comme les accélérations pouvant en plus être réduites par les valeurs mesurées des capteurs, les facteurs de correction de l'inclinaison et les corrections de l'accélération ne pouvant être dérivés qu'à partir des valeurs mesurées déterminées par les capteurs d'inclinaison (15), **caractérisé en ce que** les limites pour les courbes de mesure pouvant être dérivées des valeurs de l'inclinaison sont choisies de manière à obtenir des intervalles qui englobent les courbes de mesure qui se produisent lors du travail agricole et qui peuvent être dérivées des valeurs de l'inclinaison, **en ce que** les intervalles choisis ne contiennent pas les plages des courbes de mesure dérivées qui sont produites par l'accélération de l'engin agricole dans une ou plusieurs direction(s) spatiale(s) lors du travail agricole, un programme étant stocké dans l'ordinateur de bord, lequel contient un modèle qui décrit les tracés des courbes de mesure pour lesquels les tracés des courbes de mesure sont produits par des inclinaisons et les tracés des courbes de mesure pour lesquels les tracés des courbes de mesure sont produits par des accélérations.

2. Engin agricole selon la revendication 1, **caractérisé en ce que** le poids déterminé peut être utilisé pour la régulation des paramètres de fonctionnement de l'engin agricole au moyen d'un ordinateur de bord (14).

3. Engin agricole selon au moins l'une des revendications précédentes, **caractérisé en ce qu'**un signal est délivré, par exemple par le biais d'un bus CAN, lequel contient le poids corrigé lorsque les valeurs d'inclinaison interprétées se trouvent dans les intervalles fixés.

4. Engin agricole selon au moins l'une des revendications précédentes, **caractérisé en ce qu'**un signal est délivré, par exemple par le biais d'un bus CAN, lequel contient l'information selon laquelle les valeurs d'inclinaison interprétées ne se trouvent pas dans les intervalles fixés lorsque les valeurs d'inclinaison interprétées ne se trouvent pas dans les intervalles fixés.

5. Engin agricole selon au moins l'une des revendications précédentes, **caractérisé en ce que** les messages CAN peuvent être choisis librement.

6. Engin agricole selon au moins l'une des revendications précédentes, **caractérisé en ce que** les données déterminées pendant le fonctionnement peuvent être enregistrées dans un élément de mémoire, de préférence de l'ordinateur de bord (14), de manière à pouvoir être consultées.
